# EUROPEAN PATENT APPLICATION

(11) **EP 3 106 996 A1**
(43) Date of publication of application: **21.12.2016**
(21) Application number: 14844967.1
(22) Date of filing: 14.02.2014
(51) Int. Cl.: G06F 15/167, G06F 15/173

(54) **SYSTEM, STORAGE DEVICE, AND METHOD**

(71) Applicant: Murakumo Corporation, Tokyo 153-0061 (JP)
(72) Inventor: WATANABE, Takahiro, Tokyo 153-0061 (JP)
(74) Representative: Plougmann Vingtoft a/s
(86) International application number: PCT/JP2014/053539
(87) International publication number: WO 2015/121986

(57) **Abstract**

Provided is a computer system including a plurality of CPUs 11a and 11b each having one or a plurality of processing unit-side ports, and at least one memory 12 having two or more memory device-side ports. The memory 12 is shared by a predetermined two or more processing units among the plurality of processing units, by connecting the processing unit-side ports and the memory device-side ports one-to-one logically.

## Description

### [Technical Field]

The present invention relates to a system provided with a plurality of processing units and at least one memory device.

### [Related Art]

Conventionally, an information processing system has been proposed which is constituted by a plurality of processors, a network linking the processors, a shared memory connected to the network, and a data transfer processing device which is connected to the network and connected to an expansion storage device (see Japanese Patent Application Publication No. H8-340348).

Furthermore, a distributed shared memory-type parallel computer system has been proposed in which a plurality of processor elements, each including a computation processing device, a cache memory and a local memory unit, are connected via a network, and each of the computation processing devices in the plurality of processor elements can access any of the local memories in the plurality of processor elements, as shared memories having the same address space (see Japanese Patent Application Publication No. H11-102321).

Japanese Patent Application Publication No. H8-340348
Japanese Patent Application Publication No. H11-102321

### [SUMMARY OF THE INVENTION]

### [Problems to be Solved by the Invention]

Conventionally, there have existed systems in which a plurality of central processing units (CPUs) carry out processing in parallel, and a memory is shared by the plurality of CPUs. However, with a conventional shared memory, either the plurality of CPUs are assigned to a predetermined network and reference to the shared memory is enabled by connecting the shared memory to the network, or a plurality of memories connected respectively to each of a plurality of CPUs are managed as a single address space, thereby enabling each of the CPUs to refer to the memories of the other CPUs, or the like. Therefore, when transferring computation results between CPUs while a plurality of CPUs are carrying out parallel processing, it is necessary to transmit and receive the computation results via the CPUs, a network interface which performs complex arbitration involving a large number of components, or the like, and this impedes increasing the speed of the parallel processing.

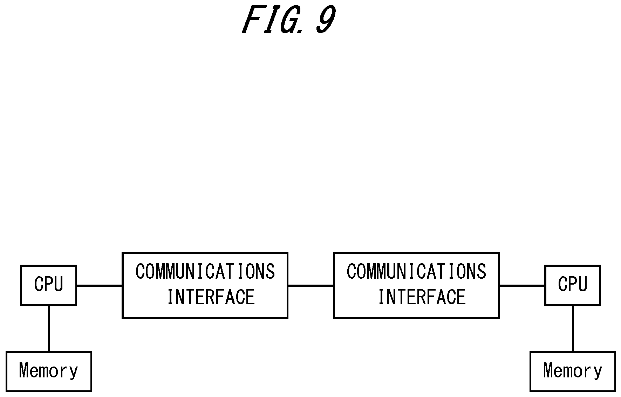

FIG. 9 is a diagram showing a conventional connection mode for a plurality of CPUs, which enables transfer of computation results between CPUs. In the configuration shown in FIG. 9, a plurality of CPUs each have a memory, and the CPUs are connected to each other by a prescribed communications interface. Therefore, in order to transfer a computation result between CPUs, when, for instance, carrying out parallel processing in a plurality of CPUs, a CPU reads out a computation result from a memory connected directly to that CPU, transmits the computation result that has been read out, to a counterpart CPU via a communications interface, and the CPU receiving the computation result writes the received computation result to a memory connected thereto, and then refers to the computation result and starts subsequent computation. In other words, in a system which is provided with a plurality of processing units, if parallel processing is carried out while transferring computation results between processing units, then a large number of clock cycles are consumed by the transmission of the computation result to another processing unit, waiting for a computation result from the other processing unit, writing the received computation result to the memory, and so on, and hence there is a problem in that the overall performance of the system is limited.

The present invention was devised in view of the problem described above, an object thereof being to provide a system including a plurality of processing units, wherein the transfer of computation results between processing units is made faster, and the overall performance of the system is improved.

### [Means for Solving the Problems]

The present invention adopts the following measures in order to resolve the problems described above. More specifically, the present invention is a system, including: a plurality of processing units, each having one or a plurality of processing unit-side ports; and at least one memory device having two or more memory device-side ports, wherein the memory device is shared by a predetermined two or more processing units among the plurality of processing units, by connecting the processing unit-side ports and the memory device-side ports one-to-one logically.

Furthermore, the system may further include a notification unit which notifies that a computation result produced by any of the processing units among the predetermined two or more processing units has been written to the memory device, or that any of the processing units among the predetermined two or more processing units has read out, from the memory device, a computation result produced by another processing unit among the predetermined two or more processing units, to the other processing unit among the predetermined two or more processing units.

Moreover, the notification unit may notify the other processing unit when the computation result has been written to the memory device, or when the computation result has been read out from the memory device, by generating an interrupt to the other processing unit.

Furthermore, the memory device may also include an interrupt unit which issues an interrupt to the other processing unit; and the notification unit may notify the other processing unit when the computation result has been written to the memory device, or when the computation result has been read out from the memory device, by causing the interrupt unit to issue an interrupt to the other processing unit.

Moreover, the notification unit may issue the interrupt by issuing a predetermined instruction to the memory device.

Furthermore, the plurality of processing units may be connected via the memory devices so as to logically configure a mesh in which the processing units are nodes; and the predetermined two or more processing units may be processing units which are arranged adjacent to each other in the mesh among the plurality of processing units.

Moreover, the plurality of processing units may be connected via the memory devices so as to logically configure a one-dimensional or multi-dimensional torus; and the predetermined two or more processing units may be processing units which are arranged adjacent to each other in the torus among the plurality of processing units.

Furthermore, the plurality of processing units may each include: computation result acquisition means for acquiring a computation result produced by another processing unit which shares the memory device with the processing unit, by reading out the computation result from the memory device; computation means for carrying out computation using the computation result acquired by the computation result acquisition means; and computation result delivery means for transferring a computation result produced by the computation means to the other processing unit by writing the computation result to the memory device, and enabling the other processing unit to carry out computation using the computation result.

Moreover, the present invention can also be understood as an invention relating to a memory device. For example, the present invention is a memory device which can be shared by two or more processing units, including: a storage unit which stores a computation result written from the two or more processing units; and an interrupt unit which, upon receiving an instruction from a processing unit that has written the computation result to the memory device, or from a processing unit that has read out the computation result from the memory device, issues an interrupt to another processing unit among the two or more processing units.

The present invention can be understood as a computer system, an information processing device, a method executed by a computer, or a program which is executed in a computer. Furthermore, the present invention can also be understood as a recording medium on which such a program is recorded so as to be readable by a computer, or other device or machine, or the like. Here, a recording medium which is readable by a computer, or the like, is a recording medium on which information, such as data or programs, is stored by an electrical, magnetic, optical, mechanical or chemical action, and which can be read by the computer, or the like.

### [Effects of the Invention]

According to the present invention, in a system provided with a plurality of processing units, the transfer of computation results between the processing units is made faster and the overall performance of the system can be improved.

### [BRIEF DESCRIPTION OF DRAWINGS]

FIG. 1 is a schematic drawing of a system relating to an embodiment of the invention;
FIG. 2 is a detailed drawing of a system relating to an embodiment of the invention;
FIG. 3 is a flowchart (A) showing a flow of computation result transfer processing relating to an embodiment of the invention;
FIG. 4 is a flowchart (B) showing a flow of computation result transfer processing relating to an embodiment of the invention;
FIG. 5 is a diagram showing a system wherein CPUs are connected in a two-dimensional torus configuration, in an embodiment of the invention;
FIG. 6 is a diagram showing a system wherein CPUs are connected in a three-dimensional torus configuration, in an embodiment of the invention;
FIG. 7 is a diagram showing a first variation of a system relating to the present embodiment, wherein memories are interconnected between the CPUs;
FIG. 8 is a diagram showing a second variation of a system relating to the present embodiment, wherein memories are interconnected between the CPUs and
FIG. 9 is a schematic drawing of a conventional connection mode of CPUs.

### [DESCRIPTION OF THE PREFERRED EMBODIMENTS]

Below, embodiments of the system, memory device and method relating to the present disclosure are described below on the basis of the drawings. However, the embodiments given below are merely examples and the system, memory device and method relating to the present disclosure are not limited to the specific configuration given below. In implementing the invention, the concrete configurations corresponding to the embodiments can be adopted, as appropriate, and various improvements and modifications can be made.

### <System configuration>

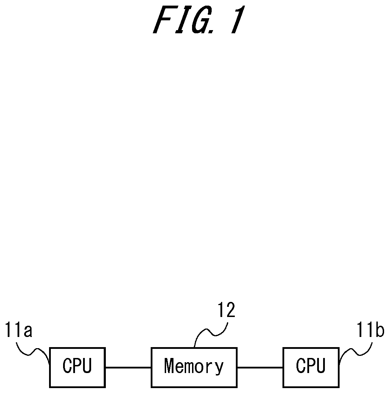

FIG. 1 is a drawing showing a schematic view of a system relating to the present embodiment. The system relating to the present embodiment is provided with CPUs 11a, 11b, and a memory (random access memory (RAM)) 12. The memory 12 is connected directly to the CPUs 11a, 11b in a readable and writeable fashion, and is thereby shared by the CPUs 11a, 11b. In the present embodiment, the connection method employed between the memory 12 and the CPUs 11a, 11b is a method in which ports (processing unit-side ports) provided for each of the CPUs are connected in series with ports (memory device-side ports) provided for the memory 12. Therefore, a memory provided with a plurality of ports which are connectable with a CPU is used for the memory 12. Furthermore, on the CPU side, it is possible to provide a plurality of ports which can be connected to a memory (see the variation described below). Connection methods other than the examples given in the present embodiment may be employed for the connection method between the memory 12 and the CPUs 11a, 11b, provided that no processor for managing communications between the CPUs and the memory is required externally to the CPU, and that the CPUs and the memory are connected one-to-one logically. Optical connections, for instance, may be used for all or a portion of the connections. Furthermore, the ports should be connected one-to-one logically. Therefore, the connection between the CPU 11a or the 11b and the memory 12 may be shared physically, using a bus, or the like. Moreover, in the present embodiment, an example is described in which the memory 12 is shared by two CPUs 11a, 11b, but the one memory 12 may also be shared by three or more CPUs.

In the system relating to the present embodiment, the transfer of computation results between the CPU 11a and the CPU 11b is made faster by connecting the CPUs 11a, 11b and the memory 12 as described above, whereby the overall performance of the system can be improved.

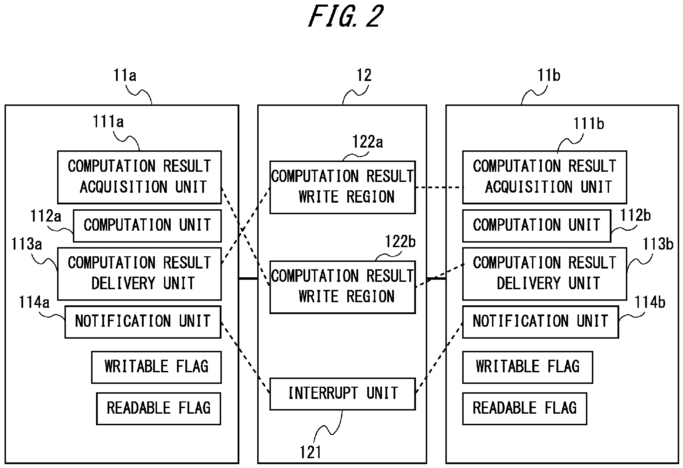

FIG. 2 is a drawing showing details of a system relating to the present embodiment. The CPUs 11a, 11b each function as computers provided respectively with a computation result acquisition unit 111a, 111b, a computation unit 112a, 112b, a computation result delivery unit 113a, 113b, and a notification unit 114a, 114b, by interpreting and executing a program which has been developed in the memory 12a or 12b that is connected directly to the CPUs 11a, 11b. Furthermore, the CPUs 11a, 11b relating to the present embodiment each have a writeable flag and a readable flag held in registers provided respectively in the CPUs. These flags are used in order to control the write/read timing of the computation results.

The computation result acquisition units 111a, 111b each acquire computation results produced by the other CPU 11a or 11b which is sharing the memory 12, by reading out the computation results from the memory 12.

The computation units 112a, 112b carry out computations by using computation results acquired by the computation result acquisition units 111a, 111b.

The computation result delivery units 113a, 113b transfer computation results produced by the computation units 112a, 112b, to the other CPU 11a or 11b sharing the memory 12, by writing the computation results to the memory 12, thereby enabling the CPU 11a or 11b to carry out computations using those computation results. In this case, the other CPU 11a or 11b acquires the computation results by the computation result acquisition unit 111a, 111b.

The notification unit 114a, 114b notifies the other CPU 11a or 11b sharing the memory 12 that a computation result produced by the CPU 11a or 11b has been written to the memory 12, or read out from the memory 12. In the present embodiment, the notification units 114a, 114b provide a notification that a computation result has been written to the memory 12 or has been read out from the memory 12, by sending a predetermined message instructing an interrupt to the CPU 11a or 11b, to the memory 12. In the present embodiment, a message instructing writing or reading of a computation result produced by the computation result delivery units 113a, 113b is transmitted together with a predetermined message indicating an interrupt to the CPU 11a or 11b, by the notification units 114a, 114b. In this way, the notification unit 114a, 114b generates an interrupt to the other CPU 11a or 11b sharing the memory 12 (a so-called "door-bell interrupt"), thereby notifying the other processing unit, CPU 11a or 11b, that a computation result has been written to the memory 12, or read out from the memory 12.

Consequently, the memory 12 is provided with an interrupt unit 121 for issuing interrupts to the CPU 11a and the CPU 11b.

When the memory 12 receives a predetermined message from a CPU 11a or 11b that has written a computation result, instructing an interrupt to another CPU (a CPU other than one carrying out writing or reading, of the CPUs sharing the memory 12), the memory 12 generates an interrupt to the CPU 11a or 11b. By adopting a configuration of this kind, the notification units 114a, 114b notify the CPUs which are sharing the memory 12 that a computation result has been written or read out. More specifically, the memory 12 is able to identify the CPU issuing the interrupt instruction, on the basis of the content of the received message or the port at which the message is received, and issues an interrupt to the CPU other than the CPU that has issued the interrupt instruction.

In the example illustrated in FIG. 2, when a computation result is written to a computation result write region 122a for the CPU 11a, and an interrupt instruction is issued from the CPU 11a to the memory 12, then the interrupt unit 121 issues an interrupt to the CPU 11b, and notifies the CPU 11b that a computation result produced by the CPU 11a has been written. Thereupon, when the computation result is read out from the computation result write region 122a for the CPU 11a, and an interrupt instruction is issued from the CPU 11b to the memory 12, then the interrupt unit 121 issues an interrupt to the CPU 11a, and notifies the CPU 11a that the computation result has been read out by the CPU 11b.

Furthermore, when a computation result is written to the computation result write region 122b for the CPU 11b, and an interrupt instruction is issued from the CPU 11b to the memory 12, then the interrupt unit 121 issues an interrupt to the CPU 11a, and notifies the CPU 11a that a computation result produced by the CPU 11b has been written. Thereupon, when the computation result is read out from the computation result write region 122b for the CPU 11b, and an interrupt instruction is issued from the CPU 11a to the memory 12, then the interrupt unit 121 issues an interrupt to the CPU 11b, and notifies the CPU 11b that the computation result has been read out by the CPU 11a. If the memory 12 is shared by three or more CPUs, then this notification is sent to two or more CPUs. In this case, the interrupt unit 121 issues an interrupt, either substantially simultaneously or consecutively, to these two or more CPUs.

When implementing the system, memory device and method relating to the present disclosure, another method may be used for notification, and an interrupt unit 121 such as that described above does not have to be provided in the memory 12. For example, a notification may be issued by a method (called a "spinlock") wherein the CPU 11a or 11b on the side receiving a computation result repeatedly checks a write completion flag or read-out completion flag which has been set in the memory 12 by the CPU on the side that has carried out the writing or read-out (these flags differ from the writeable flag and the readable flag which are described below).

Furthermore, the CPU 11a or 11b which has written or read a computation result to or from the computation result write region 122a or 122b may generate an interrupt directly in the CPU that is the destination of the notification. In this case, the CPUs must each be connected to the interrupt controller of the other counterpart CPU. If a method of this kind is adopted, depending on the length and/or congestion status of the signal lines between the CPUs and the memory, and the timing at which the interrupt is issued, there is a possibility that an interrupt may be issued before writing/read-out to or from the computation result write region 122a or 122b is actually completed, and the counterpart CPU may read from a storage region where writing of the computation result has not been completed, or the counterpart CPU may write to a storage region where reading of a computation result has not been completed. Therefore, a countermeasure may be adopted whereby an interrupt is issued after reliably detecting that writing or read-out has been completed.

Furthermore, the present embodiment describes a case in which a fixed computation result write region 122a, 122b is used by the CPU 11a, 11b as a region for writing a computation result about which the counterpart CPU is notified, but the region where the computation result is written does not have to be fixed. When the region where the computation result has been written is not fixed, then the CPUs 11a, 11b notify the counterpart device of the address where the computation result has been written. This notification may be carried out simultaneously with the interrupt described above, or may be carried out by writing the address where the computation result has been written, to a predetermined location in the memory 12.

### <Flow of processing>

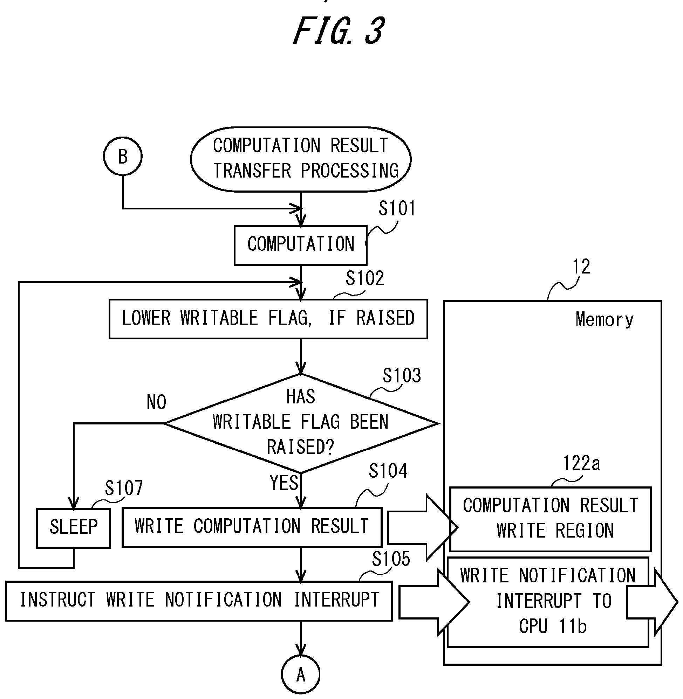

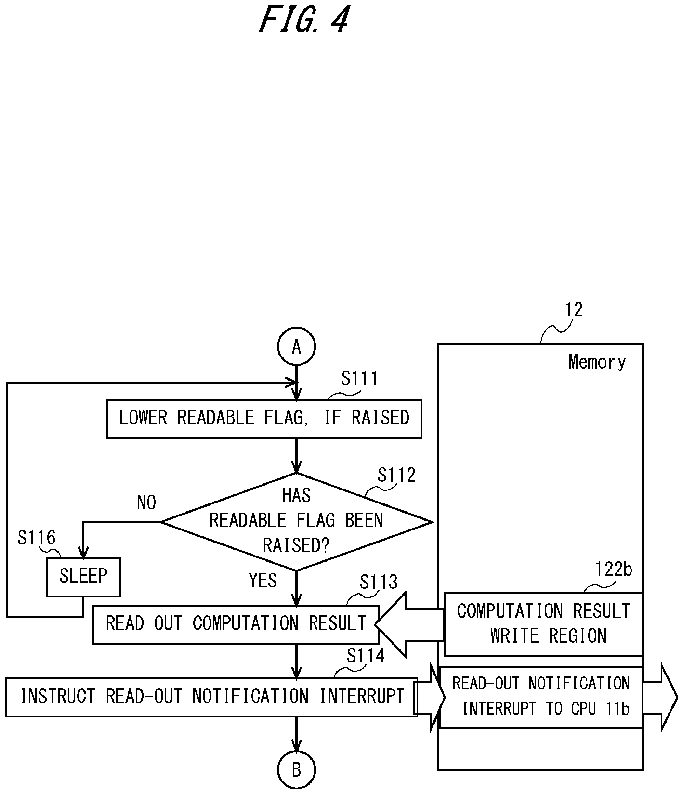

FIG. 3 and FIG. 4 are flowcharts showing a flow of computation result transfer processing relating to the present embodiment. The processing shown in this flowchart is executed repeatedly while the system according to the present embodiment is carrying out parallel processing while transferring computation results between a plurality of CPUs. The computation result transfer processing relating to the present embodiment is executed respectively in each of the CPUs belonging to the system relating to the present embodiment, but the flow of processing is described below by taking the CPU 11a to be the subject which is executing the computation result transfer processing.

A write notification interrupt handler which is executed when a write notification interrupt is received from the memory 12 and a read-out notification interrupt handler which is executed when a read-out notification interrupt is received from the memory 12 are set respectively in each of the CPUs.

The write notification interrupt handler is a handler (not illustrated) which, when a write notification interrupt is received, raises a readable flag (sets the flag to TRUE), and if the CPU is sleeping, cancels the sleeping status of the CPU and returns the CPU to processing. The readable flag is a flag which is used in order to delay the read-out of the computation result in situations during computation result transfer processing where, for instance, a computation result has been written by another CPU but computation by the CPU in question has not been completed. In the present embodiment, the readable flag is held in the CPU 11 (for example, a register provided in the CPU 11).

Meanwhile, the read-out notification interrupt handler is a handler (not illustrated) which, when a read-out notification interrupt is received, raises a writable flag (sets the flag to TRUE), and if the CPU is sleeping, cancels the sleeping status of the CPU and returns the CPU to processing. The writable flag is a flag which is used in order to delay the writing of the computation result in situations during computation result transfer processing where, for instance, reading of a computation result produced by the other CPU has been completed, but computation by the CPU in question has not been completed. In the present embodiment, the writable flag is held in the CPU 11 (for example, a register provided in the CPU 11).

The CPU 11a carries out computation assigned to that CPU in the parallel processing (step S101). In a first cycle of processing, the CPU 11a carries out computation on the basis of previously determined data. In the second and subsequent cycles of processing, the CPU 11a carries out computation on the basis of a computation result produced by the other CPU (for example, the CPU 11b), which has been acquired by the CPU 11a in step S113 described below.

When computation has been completed, the CPU 11a checks the status of the writable flag in order to determine whether or not writing to the computation result write region 122a is possible, and when the writable flag indicates that writing to the computation result write region 122a is possible (when the flag is TRUE), then the CPU 11a sets the writable flag to a value (FALSE) indicating that writing to the computation result write region 122a is not permitted (step S102).

When it has been confirmed in step S102 that the writable flag has been raised (is set to TRUE), the CPU 11a writes the computation result to the computation result write region 122a of the memory 12 (step S103 and step S104). Here, the CPU 11a issues, to the memory 12, a write notification interrupt instruction relating to the other CPU (here, the CPU 11b) apart from the CPU 11a, which is sharing the memory 12 (step S105). The processing indicated in step S103 and step S104 is carried out by sending an instruction to the memory 12 from the CPU 11a, but the write instruction and the interrupt instruction may be sent separately or may be sent simultaneously as one message.

The interrupt unit 121 of the memory 12, upon receiving the write notification interrupt instruction from the CPU 11a, issues a write notification interrupt to inform the CPU 11b that writing of the computation result by the CPU 11a has been completed. In this way, the CPU 11b is notified of the fact that a computation result has been written to the memory 12.

Upon receiving the write notification interrupt from the memory 12, the CPU 11b executes the write notification interrupt handler described above. Thereafter, similarly to the CPU 11a, the CPU 11b which is executing the computation result transfer processing, acquires the computation result produced by the CPU 11a which is sharing the memory 12 with the CPU 11b, of the plurality of processing units, from the computation result write region 122a of the memory 12. In other words, by executing the processing described above, the CPU 11a can transfer the computation result to another processing unit (here, the CPU 11b), and enable the other processing unit to carry out computation using that computation result.

Meanwhile, when it is confirmed in step S102 that the writable flag has not been raised (is set to FALSE), then there is a possibility that read-out from the computation result write region 122a by another CPU, such as the CPU 11b, has not been completed, and therefore writing of a computation result cannot be carried out. Consequently, the CPU 11a sets itself to sleeping status (step S107). If a flag indicating a sleeping status is used to determine a sleeping status of the CPU in the interrupt handler described above, then the CPU 11a raises the sleeping flag immediately before entering a sleeping status. In this case, the series of processes from the process indicated in step S102 to the process wherein the CPU raises the sleeping flag and enters sleeping mode are desirably atomic.

The CPU 11a which has entered a sleeping status executes the write notification interrupt handler or the read-out notification interrupt handler described above, upon receiving an interrupt from another CPU, such as the CPU 11b. Here, when the received interrupt is a read-out notification interrupt, then the CPU is started up by the read-out notification interrupt handler (the sleeping status is cancelled) and the writable flag is raised, and therefore the CPU carries out writing of the computation result (step S104). When a sleeping flag is used to determine the sleeping status, a process for lowering the sleeping flag is carried out after cancelling the sleeping status, but the series of processes for cancelling the sleeping status and lowering the sleeping flag are desirably atomic.

Next, the CPU 11a checks the status of the readable flag in order to determine whether or not read-out from the computation result write region 122b is possible, and when the readable flag indicates that read-out from the computation result write region 122b is possible (when the flag is set to TRUE), then the CPU 11a sets the readable flag to a value (FALSE) indicating that read-out from the computation result write region 122b is not permitted (step S111).

When it has been confirmed in step S111 that the readable flag has been raised (is set to TRUE), then the CPU 11a acquires the computation result produced by the CPU 11b which shares the memory 12 with the CPU 11a, of the plurality of processing units, by reading out the computation result from the computation result write region 122b of the memory 12 (step S112 and step S113). The computation result which is read out here is the computation result that was written to the memory 12 as a result of computation result transfer processing carried out by the CPU 11b in parallel with the computation result transfer processing carried out by the CPU 11a.

The CPU 11a instructs the memory 12 to issue an interrupt to the CPU 11b for notification of the completion of read-out, in order to notify the CPU 11b that read-out of the computation result has been completed (read-out notification interrupt instruction; step S114). The processing indicated in step S113 and step S114 is carried out by sending an instruction to the memory 12 from the CPU 11a, but the read-out instruction and the interrupt instruction may be sent separately or may be sent simultaneously as one message.

The interrupt unit 121 of the memory 12, upon receiving the read-out notification interrupt instruction from the CPU 11a, issues a read-out notification interrupt to inform the CPU 11b that read-out by the CPU 11a has been completed. In this way, the CPU 11b is notified of the fact that a computation result has been read out from the memory 12. Upon receiving the read-out notification interrupt, the CPU 11b executes the read-out notification interrupt handler mentioned above.

Meanwhile, when it is confirmed in step S111 that the readable flag has not been raised (the flag is set to FALSE), then there is a possibility that writing to the computation result write region 122b by another CPU, such as the CPU 11b, has not been completed, and therefore read-out of a computation result cannot be carried out. Consequently, the CPU 11a sets itself to sleeping status (step S116). If a flag indicating a sleeping status is used to determine a sleeping status of the CPU in the interrupt handler described above, then the CPU 11a raises the sleeping flag immediately before entering a sleeping status. In this case, the series of processes from the process indicated in step S111 to the process wherein the CPU raises the sleeping flag and enters sleeping status are desirably atomic.

The CPU 11a which has entered a sleeping status executes the write notification interrupt handler or the read-out notification interrupt handler described above, upon receiving an interrupt from another CPU, such as the CPU 11b. Here, when the received interrupt is a write notification interrupt, then the CPU is started up by the write notification interrupt handler (the sleeping status is cancelled) and the readable flag is raised, and therefore the CPU carries out read-out of the computation result (step S113). When a sleeping flag is used to determine the sleeping status, a process for lowering the sleeping flag is carried out after cancelling the sleeping status, but the series of processes for cancelling the sleeping status and lowering the sleeping flag are desirably atomic. Thereupon, the processing returns to step S101.

In the flowcharts in FIG. 3 and FIG. 4, the processing by the CPU 11a was described, but in the parallel processing relating to the present embodiment, another CPU (here, the CPU 11b) which is sharing the memory 12 carries out computation result transfer processing, in parallel with the computation result transfer processing carried out by the CPU 11a described above. It should be noted that the differences with respect to the computation result transfer processing illustrated in FIG. 3 and FIG. 4 are that the subject that is executing the processing is the CPU 11b, the region in the memory 12 where the computation result is written is the computation result write region 122b, and the object to which the interrupt is issued is the CPU 11a (the CPU other than the CPU 11b which is sharing the memory 12).

In the present embodiment, an example has been described in which an interrupt is carried out each time a computation result is written, and the computation result is transferred to the counterpart CPU, but the interrupt may also be carried out once in respect of a plurality of computation result write operations. In other words, the computation result write process may be carried out after the computation process in the processing illustrated in FIG. 3 and FIG. 4 has been repeated a predetermined number of times (not illustrated).

### <Variations>

The system according to the present disclosure should be provided with a plurality of processing units and at least one memory device, and is not limited to the configurations in FIG. 1 and FIG. 2 which depict two CPUs and one memory. Below, variations of the configuration of the system relating to the present disclosure are illustrated.

For example, when data for analysis objects is stacked three-dimensionally (in so-called "voxels"), in the case of finite element analysis, or the like, then each analysis object affects, and is affected by, another six analysis objects which are situated adjacent thereto. Therefore, conventionally, the CPUs which carry out analysis are connected in a torus or mesh configuration, and computation results are transmitted and received between the CPUs working in parallel, while carrying out analysis. In the system relating to the present embodiment, the plurality of CPUs may be connected via memories, so as to compose a torus having a single-dimensional or multi-dimensional logic configuration. Furthermore, the plurality of CPUs may be connected via memories so as to logically configure a mesh in which the CPUs each placed at the nodes (intersections) (in other words, a torus configuration does not need to be adopted). However, with a system of this kind, there is no need to exchange data with adjacent nodes (CPUs) at each step of the processing, and therefore the time taken for this data exchange greatly affects the overall performance of the system. In particular, in a conventional parallel processing system which is connected in a torus or mesh configuration, the connection lines which interconnect between the CPUs are long, and the delay increases. Therefore, the system, memory device and method relating to the present disclosure also exhibit a beneficial effect in achieving faster transfer of computation results between CPUs, in a system in which the CPUs are connected in a torus or mesh configuration. In the system relating to the present embodiment, a mode other than a torus or mesh configuration may be employed for the connection mode of the plurality of CPUs.

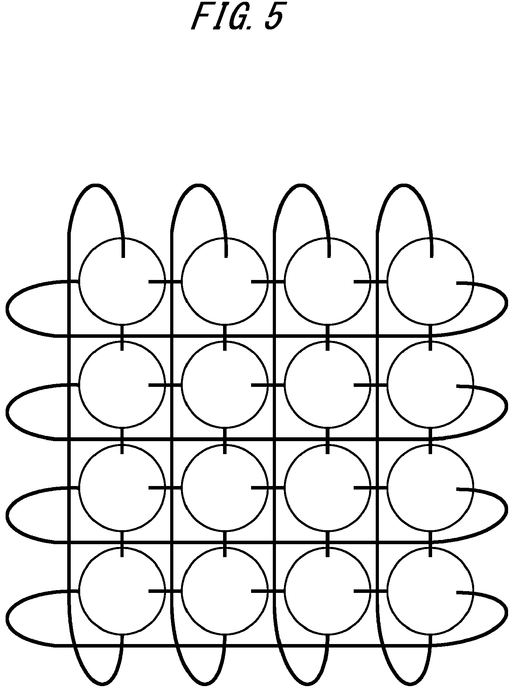

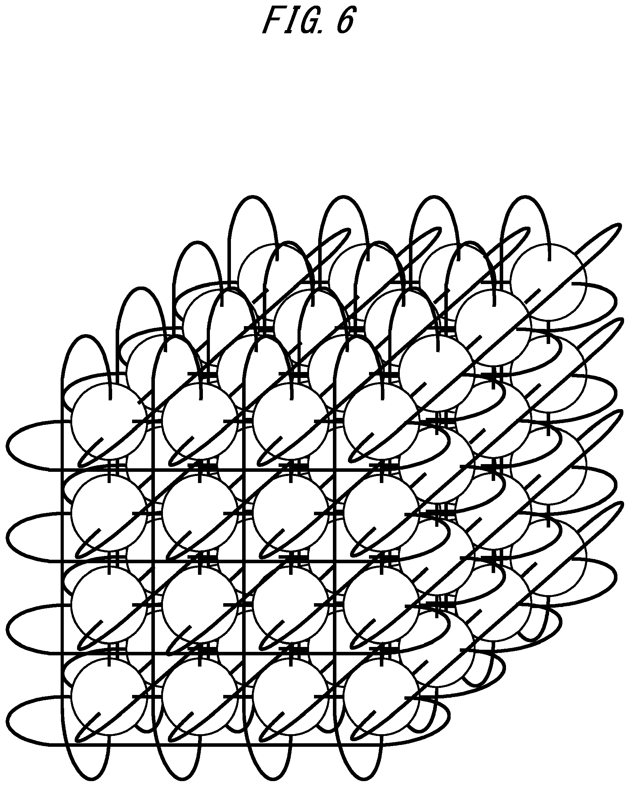

FIG. 5 is a diagram showing a schematic view of a system wherein CPUs are connected in a two-dimensional torus configuration, in the present embodiment. Furthermore, FIG. 6 is a diagram showing a schematic view of a system wherein CPUs are connected in a three-dimensional torus configuration, in the present embodiment. As described above, in the present system, the CPUs are connected in a mutually communicable fashion by sharing a memory, but in FIG. 5 and FIG. 6, only the logical positional relationships of the CPUs as nodes are displayed, and the memories disposed between the CPUs are not illustrated.

From FIG. 5, it can be seen that a torus is constituted by connecting together, in a communicable fashion, the CPUs which are arranged adjacent to each other, of the CPUs arranged in a matrix configuration, and also connecting, in a communicable fashion, the CPUs which are arranged at one end with the CPUs which are arranged at the other end. Furthermore, from FIG. 6, it can be seen that a three-dimensional torus is constituted by stacking the two-dimensional torus illustrated in FIG. 5, and also connecting, in a communicable fashion, the CPUs arranged adjacent to each other in the stacking direction, as well as connecting, in a communicable fashion, the CPUs arranged at one end and the CPUs arranged at the other end in the stacking direction. In the present embodiment, two-dimensional and three-dimensional tori have been given as examples, but the number of dimensions of the torus is not limited to these examples.

In a torus-shaped system (see FIG. 5 and FIG. 6) or a mesh-shaped system (not illustrated), memories are arranged between the CPUs (this refers to a logical position rather than a physical position). The memories are each shared by two or more CPUs which are arranged adjacent to each other in the torus or mesh configuration. In other words, by repeating the configuration illustrated in FIG. 1, a torus-shaped or mesh-shaped system is constructed, and each CPU 11a shares a memory 12 with a CPU 11b which is arranged adjacent in the torus or mesh configuration, of the plurality of CPUs included in the system.

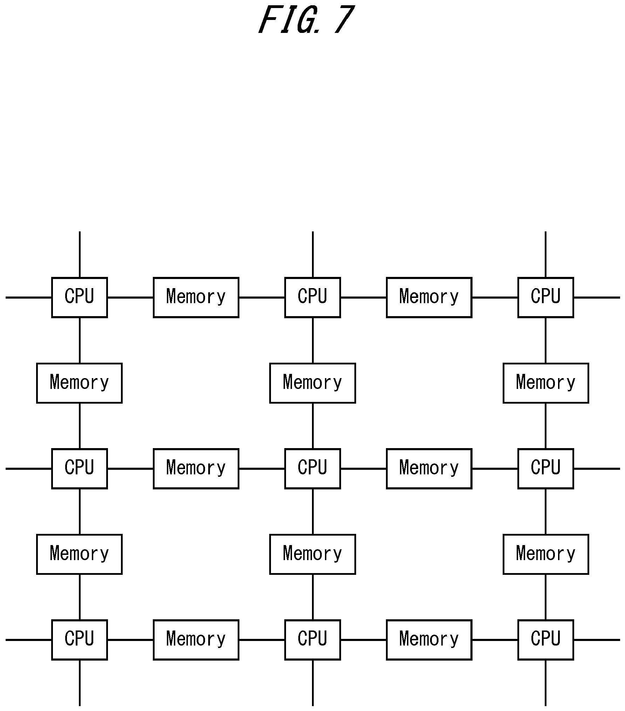

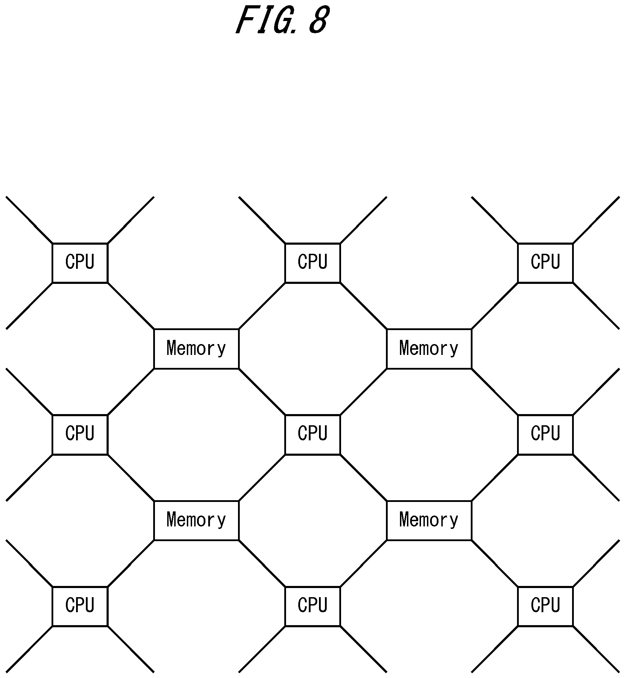

FIG. 7 and FIG. 8 are diagrams showing variations of systems relating to the present embodiment, wherein memories are interconnected between the CPUs.

In the mode shown in FIG. 7, the memories are shared by two CPUs. In other words, two CPUs which are arranged adjacent to each other in the torus or mesh configuration can use a dedicated memory in order to exchange computation results. When this memory interconnection mode is applied to the two-dimensional torus shown in FIG. 5, one CPU is connected to four memories. When this memory interconnection mode is applied to the three-dimensional torus shown in FIG. 6, one CPU is connected to a total of six memories, formed of the four memories shown in FIG. 7 plus the two memories thereabove and therebelow (not illustrated).

In the mode shown in FIG. 8, the memories are shared by three or more CPUs (in the example in FIG. 8, by four CPUs). When this memory interconnection mode is applied to the two-dimensional torus shown in FIG. 5, one CPU is connected to four memories. When this memory interconnection mode is applied to the three-dimensional torus shown in FIG. 6, since the memories are each arranged at the (eight) apex positions of a cubic shape centered on the position of a CPU, then one CPU is connected to eight memories (not illustrated).

According to the embodiment described above, in a system provided with a plurality of CPUs, the transfer of computation results between CPUs is made faster and the overall performance of the system can be improved. As described above, the embodiment described above serves as an example and does not limit the system, memory device and method relating to the present disclosure to a concrete configuration. In implementing the invention, the concrete configurations corresponding to the embodiment can be adopted, as appropriate, and various improvements and modifications can be made.

## Claims

1. A system, comprising:
a plurality of processing units, each having one or a plurality of processing unit-side ports; and
at least one memory device having two or more memory device-side ports,
wherein the memory device is shared by a predetermined two or more processing units among the plurality of processing units, by connecting the processing unit-side ports and the memory device-side ports one-to-one logically.

2. The system according to claim 1, further comprising a notification unit which notifies that a computation result produced by any of the processing units among the predetermined two or more processing units has been written to the memory device, to another processing unit among the predetermined two or more processing units.

3. The system according to claim 2, wherein the notification unit notifies the other processing unit that the computation result has been written to the memory device, by generating an interrupt to the other processing unit, when the computation result has been written to the memory device.

4. The system according to claim 3,
wherein the memory device comprises an interrupt unit which issues an interrupt to the other processing unit, and
the notification unit notifies the other processing unit that the computation result has been written to the memory device by causing the interrupt unit to issue an interrupt to the other processing unit, when the computation result has been written to the memory device.

5. The system according to claim 1, further comprising a notification unit which notifies that any of the processing units among the predetermined two or more processing units has read out, from the memory device, a computation result produced by another processing unit among the predetermined two or more processing units, to the other processing unit.

6. The system according to claim 5, wherein the notification unit notifies the other processing unit that the computation result has been read out from the memory device, by generating an interrupt to the other processing unit, when the computation result has been read out from the memory device.

7. The system according to claim 6,
wherein the memory device comprises an interrupt unit which issues an interrupt to the other processing unit, and
the notification unit notifies the other processing unit that the computation result has been read out from the memory device, by causing the interrupt unit to issue an interrupt to the other processing unit, when the computation result has been read out from the memory device.

8. The system according to claim 4 or 7, wherein the notification unit issues the interrupt by issuing a predetermined instruction to the memory device.

9. The system according to any one of claims 1 to 8,
wherein the plurality of processing units is connected via the memory devices so as to logically configure a mesh in which the processing units are nodes, and
the predetermined two or more processing units are processing units which are arranged adjacent to each other in the mesh among the plurality of processing units.

10. The system according to any one of claims 1 to 8,
wherein the plurality of processing units are connected via the memory devices so as to logically configure a one-dimensional or multi-dimensional torus, and
the predetermined two or more processing units are processing units which are arranged adjacent to each other in the torus among the plurality of processing units.

11. The system according to any one of claims 1 to 10,
wherein the plurality of processing units each include:
computation result acquisition means for acquiring a computation result produced by another processing unit which shares the memory device with the processing unit, by reading out the computation result from the memory device;
computation means for carrying out computation using the computation result acquired by the computation result acquisition means; and
computation result delivery means for transferring a computation result produced by the computation means to the other processing unit by writing the computation result to the memory device, and enabling the other processing unit to carry out computation using the computation result.

12. A memory device which can be shared by two or more processing units, comprising:
a storage unit which stores a computation result written from the two or more processing units; and
an interrupt unit which, upon receiving an instruction from a processing unit that has written the computation result to the memory device, or from a processing unit that has read out the computation result from the memory device, issues an interrupt to another processing unit among the two or more processing units.

13. The memory device according to claim 12, wherein, when there is a plurality of the other processing units, the interrupt unit issues the interrupt to the plurality of the other processing units.

14. A method for a system including: a plurality of processing units, each having processing unit-side ports; and at least one memory device having two or more memory device-side ports, the memory device being shared by a predetermined two or more processing units among the plurality of processing units, by connecting the processing unit-side ports and the memory device-side ports one-to-one logically,
the method comprising:
writing a computation result produced by the processing unit, to the memory device; and
notifying another processing unit among the predetermined two or more processing units that the writing has been carried out.

15. The method according to claim 14, wherein, in the notifying, the other processing unit is notified that the computation result has been written to the memory device by generating an interrupt to the other processing unit, when the computation result has been written to the memory device.

16. The method according to claim 14 or 15,
wherein the memory device comprises an interrupt unit which issues an interrupt to the other processing unit, and
in the notifying, the other processing unit is notified that the computation result has been written to the memory device by causing the interrupt unit to issue an interrupt to the other processing unit, when the computation result has been written to the memory device.

17. A method for a system including: a plurality of processing units, each having processing unit-side ports; and at least one memory device having two or more memory device-side ports, the memory device being shared by a predetermined two or more processing units among the plurality of processing units, by connecting the processing unit-side ports and the memory device-side ports one-to-one logically,
the method comprising:
writing a computation result produced by the processing unit, to the memory device;
causing another processing unit among the predetermined two or more processing units to read out the computation result from the memory device; and
notifying the processing unit that the read-out has been carried out.

18. The method according to claim 17, wherein, in the notifying, the other processing unit is notified that the computation result has been read out from the memory device by generating an interrupt to the processing unit, when the computation result has been read out from the memory device.

19. The method according to claim 17 or 18,
wherein the memory device comprises an interrupt unit which issues an interrupt to the other processing unit, and
in the notifying, the processing unit is notified that the computation result has been read out from the memory device by causing the interrupt unit to issue an interrupt to the processing unit, when the computation result has been read out from the memory device.

20. A method for a system including: a plurality of processing units, each having processing unit-side ports; and at least one memory device having two or more memory device-side ports, the memory device being shared by a predetermined two or more processing units among the plurality of processing units, by connecting the processing unit-side ports and the memory device-side ports one-to-one logically,
the plurality of processing units each executing:
acquiring a computation result produced by another processing unit which shares the memory device with the processing unit, by reading out the computation result from the memory device;
carrying out computation using the computation result acquired in the acquiring and
transferring a computation result produced in the computation to the other processing unit by writing the computation result to the memory device, and enabling the other processing unit to carry out computation using the computation result.
